# EUROPEAN PATENT APPLICATION

(11) **EP 4 628 345 A1**
(43) Date of publication of application: **08.10.2025**
(21) Application number: 24168360.6
(22) Date of filing: 04.04.2024
(51) Int. Cl.: B60L 3/00, B60L 50/40

(54) **DISCHARGING OF SUPER CAPACITOR**

(71) Applicant: VOLVO TRUCK CORPORATION, 405 08 Göteborg (SE)
(72) Inventor: MAITRE, Julien, 38200 CHUZELLES (FR); QUIBRIAC, Yann, 69007 LYON (FR)
(74) Representative: Ström & Gulliksson AB

(57) **Abstract**

A computer system (100) comprising processing circuitry (110) configured to: disconnect high voltage batteries (200) in a high voltage energy system from at least a super capacitator; connect the super capacitor (12) to a device (301) capable of dissipating energy, through a discharge connection (301); and control a discharge of energy from said super capacitator (12) to said device (310) capable of dissipating energy.

## Description

### TECHNICAL FIELD

The disclosure relates generally to discharge of capacitors in a high voltage battery system. In particular aspects, the disclosure relates to a method for quick discharge of a super capacitator. The disclosure can be applied to any type of energy storage systems, including high voltage battery systems, in electrical vehicles, such as battery electric vehicles (BEV), hybrid electric vehicles (HEV), and fuel cell electric vehicles (FCEV). The disclosure can further be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Super capacitors (SC), or ultra capacitators, are currently used in BEVs for engine start-stop, energy regeneration, voltage-stabilizing power supply, backup power supply, etc., and there are also applications as high-voltage energy storage systems. The SC is a high capacity capacitor, which means that it has a capacitance value much higher than solid-state capacitors, but with lower voltage limits. The coupling between the batteries and the super capacitors for electrical vehicles in the form of the hybrid energy storage systems may increase the lifespan of the batteries. A capacitor temporarily stores electrical energy and can be charged and discharged more rapidly than battery. That means that these capacitors can be complex to handle as they are capable of releasing lots of energy very quickly. The bigger they are, the more energy can be discharged. Discharge of large amounts of energy at once could potentially be a hazard, when for instance maintenance of the BEV must be performed. There is therefore a need for an improved solution for a safe and quick discharge of capacitators.

### SUMMARY

According to a first aspect of the disclosure, a computer system is presented.
The computer system comprises processing circuitry configured to: disconnect high voltage batteries in a high voltage energy system from at least a super capacitator; connect the super capacitor to a device capable of dissipating energy, through a discharge connection; and control a discharge of energy from said super capacitator to said device capable of dissipating energy. The first aspect of the disclosure may seek to provide a safe and quick solution for discharging the super capacitor for instance before performing maintenance or service of the high voltage energy system. A technical benefit may include that existing solutions already utilized onboard the vehicle, for discharge and dissipation of electrical energy as heat, may be used for this purpose. Further, since both the super capacitator and the device to which energy is discharged are onboard the vehicle, there is no need to connect any external devices for discharge, which also provides as safer and more efficient way of discharging the super capacitor before performing service etc.

Optionally in some examples, including in at least one preferred example, the processing circuitry may further be configured to: control switching of auxiliary components to an off position before connection of super capacitator to the device capable of dissipating energy. A technical benefit may include that the auxiliary components may be protected from over-charge during discharge of the super capacitator.

Optionally in some examples, including in at least one preferred example, said auxiliary components may comprise any one of propulsion device, DC/DC convertor, electrical pumps and compressors. A technical benefit may include that this ensures a safe working environment for a technician.

Optionally in some examples, including in at least one preferred example, the processing circuitry may further be configured to control that a vehicle comprising said high voltage energy system is a service mode before disconnecting said high voltage batteries. A technical benefit may include that this ensures that the batteries are not disconnected before the truck is in service mode.

Optionally in some examples, including in at least one preferred example, the processing circuitry may further be configured to connect the super capacitor to an air compressor through a discharge connection. A technical benefit may include that some of the energy discharged from the super capacitator may be utilized for operating the air compressor, thus enhancing the dissipation of energy or the rate of the discharge, i.e. it may lead to a to a safer and more reliable operation and cooling of an air cooled resistor.

Optionally in some examples, including in at least one preferred example, the processing circuitry may further be configured to connect the super capacitor to a device capable of dissipating energy and to an air compressor, through a respective discharge connection wherein said respective discharge connection may be a high voltage connection. A technical benefit may include be that the discharge takes place more rapidly since a portion of the discharged energy may also be distributed to the air compressor, which ensures that there is a sufficient air flow to cool the air cooled resistor..

Optionally in some examples, including in at least one preferred example, the processing circuitry may further be configured monitor the discharge of energy from said super capacitator; and determine that a pre-determined level of charge of the super capacitator has been reached, and wherein said pre-determined level of charge is 50 V or less. The predetermined level of charge may thus be set to a level which is regarded at safe for an operator, or service technician in a dry environment. In one example, the pre-determined level of charge is preferably 0 V, or at least close to 0 V, i.e. a complete discharge of the super capacitator.

Optionally in some examples, including in at least one preferred example, the processing circuitry may further be configured to disconnect said discharge connection between said air compressor and said super capacitator, after said super capacitor has been discharged. A technical benefit may include that the discharge from the super capacitator is discontinued.

According to a second aspect there is provided a vehicle comprising at least one high voltage energy system and a super capacitator , and a device capable of dissipating energy and the computer system of the first aspect, operatively coupled to the high voltage energy system and a super capacitator.

Optionally in some examples, including in at least one preferred example, said vehicle may be any one of a battery electric vehicle, hybrid electric vehicle and a fuel cell electric vehicle. A technical benefit may include that the vehicle may utilize a hybrid energy storage system.

Optionally in some examples, including in at least one preferred example said device capable of dissipating energy may be an air cooled resistor. A technical benefit may include that existing solutions for discharge and dissipation of electrical energy as heat may be utilized.

Optionally in some examples, including in at least one preferred example, said device may be arranged in an air conduit, and wherein an air compressor may further be arranged upstream of said device in said air conduit. A technical benefit may include that the dissipation of energy becomes even more efficient.

According to a third aspect of the present disclosure there is provided a computer-implemented method, comprising: determining a level of charge in a super capacitator, by a processing circuitry of a computer system; disconnecting high voltage batteries from said super capacitator, by a processing circuitry of a computer system; connecting the super capacitor to a device capable of dissipating energy through a discharge connection by a processing circuitry of a computer system; and controlling a discharge of energy from said super capacitator to said device capable of dissipating energy, by a processing circuitry of a computer system. The third aspect of the disclosure may seek to provide a safe and quick solution for discharging the super capacitor for instance before performing maintenance or service of the high voltage energy system. A technical benefit may include that existing solutions for discharge and dissipation of electrical energy as heat may be utilized.

Optionally in some examples, including in at least one preferred example, the method may further comprise controlling switching of auxiliary components to an off position before connecting the super capacitator to the device capable of dissipating energy, by a processing circuitry of a computer system. A technical benefit may include that discharge to the auxiliary components from the super capacitator is prevented, thus creating a safer working environment.

Optionally in some examples, including in at least one preferred example, the method may further comprise monitoring the discharge of energy from said super capacitator, by a processing circuitry of a computer system; and determining that a pre-determined level of charge of the super capacitator has been reached by a processing circuitry of a computer system. A technical benefit may include safeguarding that a safe level of charge has been reached.

Optionally in some examples, including in at least one preferred example, the method may further comprise connecting the super capacitor to an air compressor through a discharge connection by a processing circuitry of a computer system. A technical benefit may include that the energy discharged from the super the air compressor is utilized in operating the air compressor.

Optionally in some examples, including in at least one preferred example, the method may further comprise disconnecting said discharge connection between said super capacitator and said device and said discharge connection between said air compressor and said super capacitator, after said super capacitor has been discharged, by a processing circuitry of a computer system. A technical benefit may include that the discharge from the super capacitator is discontinued.

Optionally in some examples, including in at least one preferred example, the method may further controlling a discharge of energy from said super capacitator to said device capable of dissipating energy for a period of time, by a processing circuitry of a computer system, wherein said period of time ranges from 2 to 15 minutes. A technical benefit may include that the discharge of energy takes place during a relatively short period of time, which may increase the efficiency during service of the vehicle.

According to a fourth aspect there is provided a computer program product comprising program code for performing, when executed by the processing circuitry, the method of any of the third aspect.

According to a fifth aspect there is provided a non-transitory computer-readable storage medium comprising instructions, which when executed by the processing circuitry, cause the processing circuitry to perform the method of the third aspect.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is a side view of an exemplary vehicle including a super capacitor according to an example.
**FIG. 2** is a schematic view of an exemplary energy storage system and super capacitator operatively connected to a computer system according to an example.
**FIG. 3** is a schematic view of an exemplary energy storage system comprising a super capacitator, according to one example.
**FIG. 4** is a schematic view of an exemplary energy storage system comprising a super capacitator, according to one example.
**FIG. 5** is a schematic view of a method for discharging of a super capacitator according to an example.
**FIG. 6** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

Utilizing super capacitators in high voltage energy systems poses a challenge in handling the amount of energy contained in the capacitator when a vehicle for instance is in need of service or maintenance. In the present disclosure, a system and method for safe and quick discharge of the super capacitator is described. Using retardation solutions, i.e. devices capable of dissipating energy, the energy discharged or released from the capacitator can be converted into for instance heat, which there are several solutions to dissipate in a vehicle.

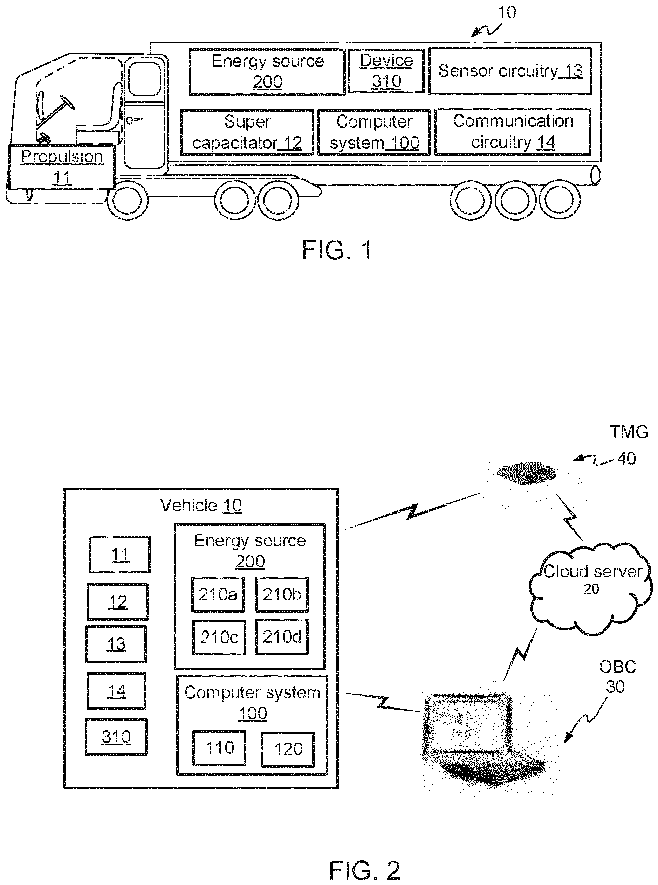

**FIG. 1** is an exemplary schematic side view of a vehicle **10.** The vehicle may be any type of vehicle, but is here depicted as a heavy duty vehicle. In other examples, other heavy-duty vehicles may be employed, e.g., trucks, buses, and construction equipment. The vehicle **10** comprises all necessary vehicle units and associated functionality such that it may operate as the skilled person would expect of a vehicle **10,** such as a powertrain, chassis, and various control systems. The present solution could be implemented in other high voltage energy systems utilizing a super capacitator **12.** The vehicle **10** comprises one or more propulsion sources **11.** The propulsion source **11** may be any suitable propulsion source **11** exemplified by, but not limited to, one or more of an electrical motor i.e. battery electrical vehicle (BEV), or a combination of an electrical motor and a combustion engine such as a diesel, gas or gasoline powered engine, i.e. a hybrid electrical vehicle (HEV). The vehicle **10** further comprises an energy source **200,** such as high voltage batteries, suitable for providing energy for the propulsion source **11.** That is to say, if the propulsion source **11** is an electrical motor, a suitable energy source **200** could be a battery or a fuel cell, or a combination thereof. The devices may be located on the vehicle chassis. The vehicle **10** further comprises sensor circuitry **13** arranged to detect, measure, sense or otherwise obtain data relevant for service operation of the vehicle **10.** The data relevant for service operation of the vehicle **10** may be exemplified by, but not limited to, a status (state of charge etc.) of the energy source **200** of the vehicle **10.** Advantageously, the vehicle **10** further comprises communications circuitry **14** configured for communication with, to the vehicle **10,** external devices. The vehicle **10** further comprises a computer system **100,** the computer system **100** will be further explained in following sections. The vehicle further comprises at least one device capable of dissipating energy **310,** which will exemplified further below. The super capacitor **12** may be provided for engine start-stop, energy regeneration, voltage-stabilizing power supply, backup power supply, etc. Regardless of the function of the super capacitator, it may be advantageous to control the discharge of the super capacitator before performing service to the vehicle **10.** The vehicle **10** may therefore, in one preferred example, be entered into a service mode before discharge of the super capacitator **12.** By service mode is meant at special mode of the vehicle which could be activated for the purpose of service or repairs to be made on the vehicle, i.e. a diagnostic and repair interface which is available on the vehicle. The service mode could for instance include shutting down, or being able to turn off, certain auxiliary devices, shutting down electrical connections or allow for a service technician to interact with the on-board computer system.

Advantageously, a vehicle **10** according to the present disclosure is a BEV or HEV or FCEV. To this end, the vehicle **10** of the present disclosure comprise at least one energy source **200** is the form of an electrical energy source. In **FIG. 2****,** a block diagram of the vehicle **10** is shown. The vehicle energy source **200** comprises at least one battery pack **210a, 210b, 210c, 210d.** In **FIG. 2****,** the vehicle energy source **200** is shown comprising four battery packs **210a, 210b, 210c, 210d.** However, this is for illustrative purposes, and the energy source **200** may comprise any number of battery packs **210a, 210b, 210c, 210d.** The battery packs **210a, 210b, 210c, 210d** may be connected in series, in parallel or a combination of series or parallel connections in order to provide a rated voltage an capacity from the energy source **200.** For the present disclosure, it is assumed that the at least two battery packs **210a, 210b, 210c, 210d** are connected in parallel. In some examples, a voltage of the energy source is approximately 800 V. The vehicle **10** further comprises a super capacitator **12.** The vehicle **10** further comprises at least one device **310** capable of dissipating energy.

The vehicle **10** may communicate with a cloud server **20** directly, via the communications circuitry **14,** or via a communications interface, via the communications circuitry **14,** such as an on-board communication or diagnostic tool exemplified by an OBC **30** in **FIG. 2****.** The vehicle **10** may further be operatively connected to telematics gateways (TGW) **40,** via the communications circuitry **14.** The TGW **40** may thus be engaged remotely or locally. Remote control may be performed through app or cloud server **20,** or through on-board diagnostics, and the above mentioned communications interfaces, such as through the OBC **30** through a cloud server **20.** The cloud server **20** may be any suitable cloud server exemplified by, but not limited to, Amazon Web Services (AWS), Microsoft Azure, Google Cloud Platform (GCP), IBM Cloud, Oracle Cloud Infrastructure (OCI), DigitalOcean, Vultr, Linode, Alibaba Cloud, Rackspace etc. The communications interface is advantageously a wireless communications interface exemplified by, but not limited to, Wi-Fi, Bluetooth, Zigbee, Z-Wave, LoRa, Sigfox, 2G (GSM, CDMA), 3G (UMTS, CDMA2000), 4G (LTE), 5G (NR) etc.

As further exemplified by **FIG. 2****,** the computer system **100** of the vehicle **10** is advantageously operatively connected to the super capacitator **12,** communications circuitry **14,** the sensor circuitry **13,** the energy source **200** and/or the propulsion source **11** of the vehicle **10.** The computer system **100** comprises processing circuitry **110.** The computer system **100** may comprise a storage device **120,** advantageously a non-volatile storage device such as hard disk drives (HDDs), solid-state drives (SSDs) etc. In some examples, the storage device **120** is operatively connected to the computer system **100.**

The energy source, i.e. the high voltage batteries, **200** may advantageously be configured to provide energy to, at least, the propulsion source **11** of the vehicle **10.** Additionally, or alternatively, the energy source **200** may be configured to provide energy to other parts or components of the vehicle **10** such as, but not limited to, vehicle electronics, climate control of the vehicle **10,** safety functions of the vehicle etc. The super capacitor **12** may as described previously be provided for engine start-stop, energy regeneration, voltage-stabilizing power supply, backup power supply, etc. Regardless of the function of the super capacitator, it may be advantageous to control the discharge of the super capacitator before performing service to the vehicle **10.** It may therefore be advantageous to control the connection or coupling of the energy source **200** to the super capacitator **12** in order to stop the current flowing from the energy source **200** into the super capacitator **12.** This means that the processing circuitry **110** may control the connection between the energy source **200** to the super capacitator **12,** such that it may be disconnected when the vehicle **10** has entered into a service mode.

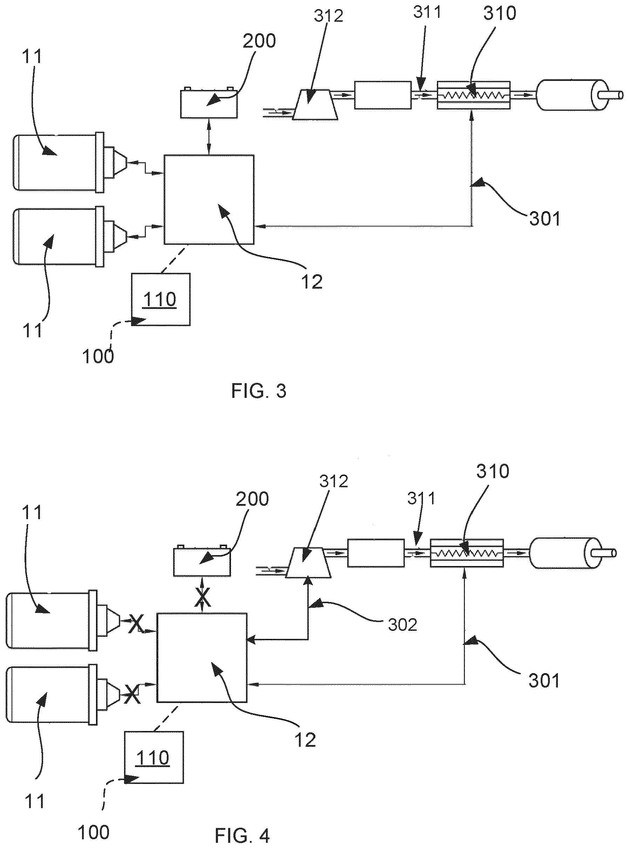

**FIG. 3** exemplifies an energy storage system comprising an energy source **200,** such as a high voltage battery or batteries and, a super capacitator **12,** which are connected to the propulsion device **11.** The function of the super capacitator has been described above. The computer system **100,** comprising a processing circuitry **110** is operatively coupled to the energy storage system and the components thereof. **FIG. 3** further exemplifies that a discharge connection **301** may be established between the super capacitator **12** and a device **310** capable of dissipating energy or converting electrical energy to heat, such that the energy stored or contained in the super capacitator **12** may be discharged directly to the device **310.** The amount of energy discharged is preferable to a pre-determined or below a pre-determined level of charge of the super capacitator **12.** Preferably the discharge connection **301** is established between the SC and the device capable of dissipating energy only after entering the vehicle into a service mode.

In one example the device **310** may be an air cooled resistor arrangement in an air conduit **311,** such as a brake resistor, comprising an electrically conductive resistor element, which can be connected to the super capacitator. The resistor element of the device **310** may thus be capable of converting the electrical energy discharged from the super capacitator into heat, which in turn can be dissipated. In other examples, the super capacitator may be connected to any other device capable of converting or dissipating the energy from the super capacitator, i.e., in every retardation system that is producing heat there is usually a device at the end where the heat is dissipated through a joule effect in the air.

In the exemplified arrangement in **FIG. 3** the device **310** is exemplified as an air cooled resistor. An air cooled resistor may be a preferred choice for dissipating energy more efficiently, thus leading to a faster discharge of energy. Further to this, using an air cooled resistor which is also arranged on or in the chassis of the vehicle, means that no external devices for discharging the super capacitator **12** are necessary, or need to be connected to the vehicle, which in turn further increased the safety for the service technician. In this example, the super capacitator **12** may further be connected to and power a turbine or air compressor **312** which provides an airflow for cooling of the resistor **310.** In the exemplified arrangement a flow restriction arrangement may be arranged in the air conduit **311** and downstream and in fluid communication with the air compressor **312** and be configured to increase the pressure level of the air exhausted by the air compressor.

**FIG. 4** exemplifies the operation, or discharge, of the super capacitator after setting or entering the vehicle in a service mode. A workshop technician may issues a request to discharge the super capacitor (s), locally or remotely, as exemplified above that will, disconnect high voltage batteries **200,** and set auxiliary components, such as DC/DC converter, propulsion devices (i.e. engines) **11,** electrical pumps and compressors, such as those relating to air conditioning and steering to OFF, which is shown through the marking **X** of the connections between the energy source **200** and the exemplified auxiliary components **11.** Once the discharge connection **301** has been established between the super capacitor **12** and the device **310,** the super capacitator is discharged quickly and safely to a pre-determined level of charge. In one example, the pre-determined level of charge super capacitator **12** is fully or completely discharged. In one example the pre-determined level of charge may be 50 V or less. In one example the pre-determined level of charge of the super capacitator **12** is a level which is regarded as safe for the service technician or operator to handle. In one example the discharge connection **301** may be a high voltage connection. The discharge connection **301** may be established by a controllable switch. In one example the time range for discharge may be in the range of 2 to 15 minutes, depending on the amount or level of energy in the super capacitator. In one example the duration of discharge of energy is about 3 minutes for a 3kWh battery pack, and in one example the duration of discharge of energy is about 10 minutes for a 10 kWh battery. In one example, a discharge connection **302** may also be established between the air compressor or turbine **312** and super capacitator **12** in order to provide power to the air compressor to provide an air flow for cooling the resistor element **310.** The discharge connection 302 may be established by a controllable switch.

In one, not illustrated example, there may be an audio and/or visual warning or information to the service technician during the discharge of the super capacitator. In one example, the direction indicators of the vehicle may be controlled or set to a blinking state to inform about the ongoing action, by the processing circuitry **110** of the computer system **100.** When the discharge has been completed, the direction indicators stay in a steady position and then turn off. In one example, this could be complemented by or replaced by an audio information, for instance in the form of horn signals, or an audio message from the vehicles on-board messaging service. Providing an audio and/or visual information of warning to the service technician could be beneficial since the amount of energy in the super capacitator could be potentially harmful if it is released.

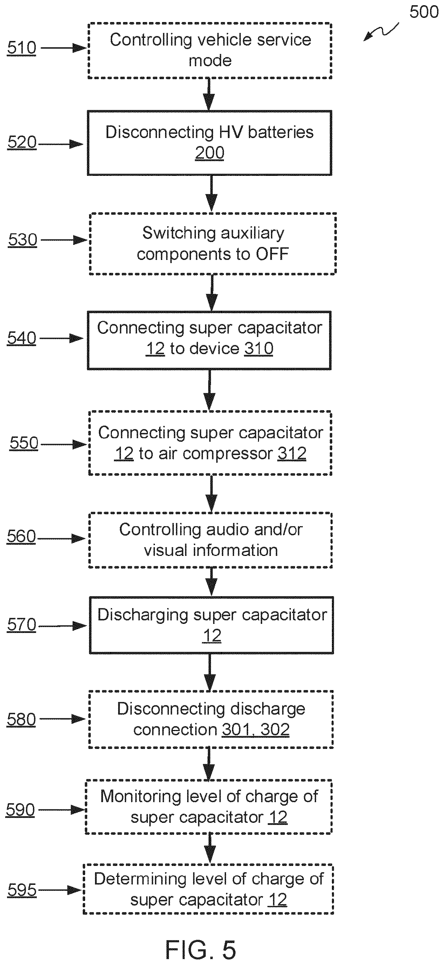

In **FIG. 5****,** a schematic view of a method **500** is shown. The method **500** is advantageously a computer implemented method **500.** The method **500,** or at least part of the method **500,** is advantageously performed by processing circuitry **110** of the computer system **100.** That is to say, the processing circuitry **110** may be configured to perform, in part or in full, the method **500,** configured to cause, in part or in full, performance of the method **500** or a combination thereof. The method **500** will be briefly introduced with reference to **FIG. 5****,** but the skilled person will appreciate that the method **500** may very well be extended to comprise any further feature, functionality or example presented herein.

The method **500** may comprise controlling **510** that a vehicle **10** comprising said high voltage energy system is a service mode before disconnecting **520** said high voltage batteries **200.** The method further comprises disconnecting the super capacitator **12** from a high voltage battery **200** of an energy storage system. The method may further comprise controlling or switching **530** auxiliary components to an off position, i.e. shutting off a prolusion device **11,** or engine and other components such as DC/DC converters etc. This may be performed after entering the vehicle into a service mode. The method further comprises connecting **540** the super capacitator **12** to a device **310** capable of dissipating energy (through a discharge connection **301,** as described above), and discharging **570** the energy stored or contained in the super capacitator **12** to the device **310.** In one example the method **500** further comprises connecting **550** the super capacitator **12** to an air compressor or turbine **312** through a discharge connection **302.** In one example the discharge connection **302** may be a high voltage connection. The discharge connection **302** between the super capacitor **12** may be established by a controllable switch. During discharge of energy the method may comprise controlling **560** an audio and/or visual information or warning system of the ongoing discharge of energy. Once the discharge operation has been completed to the pre-determined or a safe level of charge, the method may further comprise disconnecting **580** the discharge connection between the super capacitator **12** and the device **310** and the link between the super capacitator **12** and the air compressor **312.** However, disconnecting the discharge connections **301, 302** may also be performed after leaving the service mode. The method **500** may thus also comprise monitoring **590** the level of charge in the super capacitator **12** and determining **595** when said pre-determined level of charge has been reached.. In one example the pre-determined level of charge may be 50 V or less. In one example the pre-determined level of charge of the super capacitator **12** is a level which is regarded as safe for the service technician or operator to handle. In one example, the auxiliary components may be switched to on mode after completion of discharge, or after leaving service mode of the vehicle.

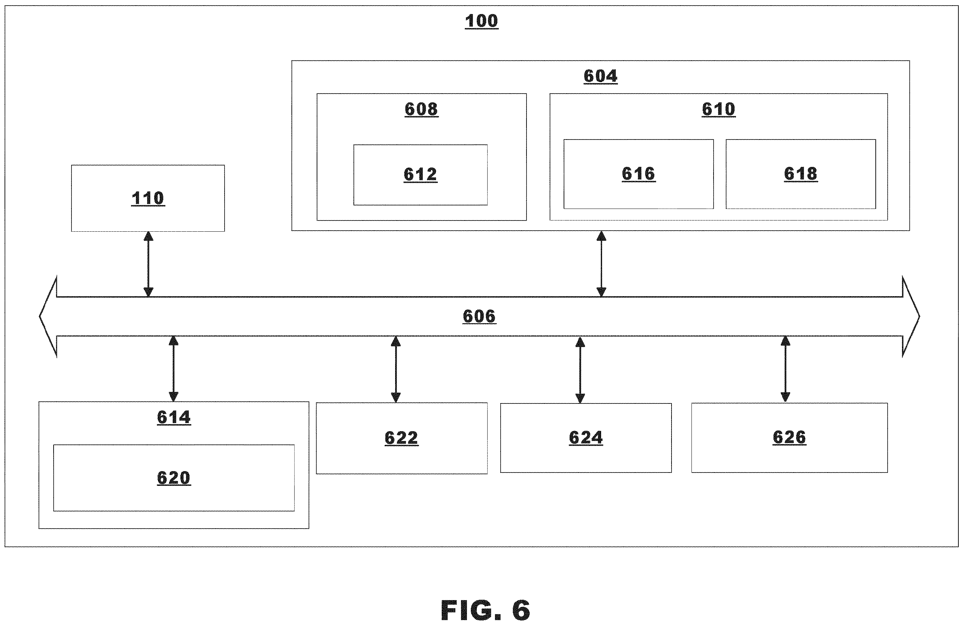

**FIG. 6** is a schematic diagram of a computer system **100** for implementing examples disclosed herein. The computer system **100** is adapted to execute instructions from a computer-readable medium to perform these and/or any of the functions or processing described herein. The computer system **100** may be connected (e.g., networked) to other machines in a LAN, an intranet, an extranet, or the Internet. While only a single device is illustrated, the computer system **100** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **100** may comprise at least one computing device or electronic device capable of including firmware, hardware, and/or executing software instructions to implement the functionality described herein. The computer system **100** may include processing circuitry **110** (e.g., processing circuitry including one or more processor devices or control units), a memory **604,** and a system bus **606.** The computer system **600** may include at least one computing device having the processing circuitry **602.** The system bus **606** provides an interface for system components including, but not limited to, the memory **604** and the processing circuitry **110.** The processing circuitry **110** may include any number of hardware components for conducting data or signal processing or for executing computer code stored in memory **604.** The processing circuitry **110** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **110** may further include computer executable code that controls operation of the programmable device.

The system bus **606** may be any of several types of bus structures that may further interconnect to a memory bus (with or without a memory controller), a peripheral bus, and/or a local bus using any of a variety of bus architectures. The memory **604** may be one or more devices for storing data and/or computer code for completing or facilitating methods described herein. The memory **604** may include database components, object code components, script components, or other types of information structure for supporting the various activities herein. Any distributed or local memory device may be utilized with the systems and methods of this description. The memory **604** may be communicably connected to the processing circuitry **110** (e.g., via a circuit or any other wired, wireless, or network connection) and may include computer code for executing one or more processes described herein. The memory **604** may include non-volatile memory **608** (e.g., read-only memory (ROM), erasable programmable read-only memory (EPROM), electrically erasable programmable read-only memory (EEPROM), etc.), and volatile memory **610** (e.g., random-access memory (RAM)), or any other medium which can be used to carry or store desired program code in the form of machine-executable instructions or data structures and which can be accessed by a computer or other machine with processing circuitry **602.** A basic input/output system (BIOS) **612** may be stored in the non-volatile memory **608** and can include the basic routines that help to transfer information between elements within the computer system **600.**

The computer system **100** may further include or be coupled to a non-transitory computer-readable storage medium such as the storage device **614,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **614** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **614** and/or in the volatile memory **610,** which may include an operating system **616** and/or one or more program modules **618.** All or a portion of the examples disclosed herein may be implemented as a computer program **620** stored on a transitory or non-transitory computer-usable or computer-readable storage medium (e.g., single medium or multiple media), such as the storage device **614,** which includes complex programming instructions (e.g., complex computer-readable program code) to cause the processing circuitry **110** to carry out actions described herein. Thus, the computer-readable program code of the computer program **620** can comprise software instructions for implementing the functionality of the examples described herein when executed by the processing circuitry **110.** In some examples, the storage device **614** may be a computer program product (e.g., readable storage medium) storing the computer program **620** thereon, where at least a portion of a computer program **620** may be loadable (e.g., into a processor) for implementing the functionality of the examples described herein when executed by the processing circuitry **110.** The processing circuitry **110** may serve as a controller or control system for the computer system **100** that is to implement the functionality described herein.

The computer system **100** may include an input device interface **622** configured to receive input and selections to be communicated to the computer system **100** when executing instructions, such as from a keyboard, mouse, touch-sensitive surface, etc. The input device interface is further exemplified in **FIG. 2****.** Such input devices may be connected to the processing circuitry **110** through the input device interface **622** coupled to the system bus **606** but can be connected through other interfaces, such as a parallel port, an Institute of Electrical and Electronic Engineers (IEEE) 1394 serial port, a Universal Serial Bus (USB) port, an IR interface, and the like. The computer system **100** may include an output device interface **624** configured to forward output, such as to a display, a video display unit (e.g., a liquid crystal display (LCD) or a cathode ray tube (CRT)), or to any other audio and/or visual system, such as controlling the direction lights of the vehicle. The computer system **100** may include a communications interface **626** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

The present disclosure will now be explained in the following examples.

Example 1: A computer system 100 comprising processing circuitry 110 configured to: disconnect high voltage batteries 200 in a high voltage energy system from at least a super capacitator; connect the super capacitor 12 to a device 301 capable of dissipating energy, through a discharge connection 301; and control a discharge of energy from said super capacitator 12 to said device 310 capable of dissipating energy.

Example 2: The computer system 100 of claim 1, wherein the processing circuitry 110 is further configured to: control switching of auxiliary components 11 to an off position before connection of super capacitator 12 to the device 310 capable of dissipating energy.

Example 3: The computer system 100 of claim 3, wherein said auxiliary components comprises any one of propulsion device, DC/DC convertor, electrical pumps and compressors.

Example 4: The computer system 100 of any of examples 1-3, wherein the processing circuitry 110 is further configured to: control that a vehicle comprising said high voltage energy system is a service mode before disconnecting said high voltage batteries 200.

Example 5: The computer system 100 of any of examples 1-3, wherein the processing circuitry 110 is further configured to: connect the super capacitor 12 to an air compressor 312 through a discharge connection 302.

Example 6: The computer system of any of examples 1-5, wherein the processing circuitry 110 is further configured to: connect the super capacitor 12 to a device 310 capable of dissipating energy and to an air compressor 312, through a discharge connection 301, 302, wherein said discharge connection 301, 302 is a high voltage connection.

Example 7: The computer system 100 of any of examples 1-6, wherein the processing circuitry 110 is further configured to: monitor the discharge of energy from said super capacitator 12; and determine that a pre-determined level of charge of the super capacitator has been reached, and wherein said pre-determined level of charge is 50 V or less.

Example 8: The computer system of any of examples 1-6, wherein the processing circuitry is further configured to: disconnect said discharge connection 302 between said air compressor 312 and said super capacitator 12, after said super capacitor has been discharged.

Example 9: A vehicle comprising at least one high voltage energy system and a super capacitator 12, and a device capable of dissipating energy 301 and the computer system 100 of any of examples 1-7 operatively coupled to the high voltage energy system and a super capacitator 12.

Example 10: The vehicle of example 9, wherein said vehicle is any one of a battery electric vehicle, hybrid electric vehicle and a fuel cell electric vehicle.

Example 11: The vehicle of example 9, wherein said device 310 capable of dissipating energy is an air cooled resistor.

Example 12: The vehicle of any of examples 9 to 11, wherein said device 310 is arranged in an air conduit 311, and wherein an air compressor 312 is further arranged upstream of said device 310 in said air conduit 311.

Example 13: A computer-implemented method, comprising: determining a level of charge in a super capacitator 12, by a processing circuitry 110 of a computer system 100; disconnecting high voltage batteries 200 from said super capacitator 12, by a processing circuitry 110 of a computer system 100; connecting the super capacitor 12 to a device 310 capable of dissipating energy through a discharge connection 301 by a processing circuitry 110 of a computer system 100; and controlling a discharge of energy from said super capacitator 12 to said device 310 capable of dissipating energy, by a processing circuitry 110 of a computer system 100.

Example 14: The method of example 13, further comprising: controlling switching of auxiliary components 11 to an off position before connecting the super capacitator 12 to the device 310 capable of dissipating energy, by a processing circuitry 110 of a computer system 100.

Example 15: The method of examples 13-14, further comprising: monitoring the discharge of energy from said super capacitator 12, by a processing circuitry 110 of a computer system 100; and determining that a pre-determined level of charge of the super capacitator has been reached by a processing circuitry 110 of a computer system 100.

Example 16: The method of any of examples 13 to 15, further comprising: connecting the super capacitor 12 to an air compressor 312 through a discharge connection 302 by a processing circuitry 110 of a computer system 100.

Example 17: The method of examples 13-16, further comprising: disconnecting said discharge connection 301 between said super capacitator 12 and said device 310 and said discharge connection 302 between said air compressor 312 and said super capacitator 12, after said super capacitor has been discharged, by a processing circuitry 110 of a computer system 100.

Example 18: The method of claims 13-17, further comprising: controlling a discharge of energy from said super capacitator 12 to said device 310 capable of dissipating energy for a period of time, by a processing circuitry 110 of a computer system 100, wherein said period of time ranges from 2 to 15 minutes.

Example 19: A computer program product comprising program code for performing, when executed by the processing circuitry, the method of any of examples 13-19.

Example 20: A non-transitory computer-readable storage medium comprising instructions, which when executed by the processing circuitry 110, cause the processing circuitry 110 to perform the method of any of examples 13-19.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (100) comprising processing circuitry (110) configured to:
disconnect high voltage batteries (200) in a high voltage energy system from at least a super capacitator;
connect the super capacitor (12) to a device (301) capable of dissipating energy, through a discharge connection (301); and
control a discharge of energy from said super capacitator (12) to said device (310) capable of dissipating energy.

2. The computer system (100) of claim 1, wherein the processing circuitry (110) is further configured to:
control switching of auxiliary components (11) to an off position before connection of super capacitator (12) to the device (310) capable of dissipating energy.

3. The computer system (100) of any of claims 1-3, wherein the processing circuitry (110) is further configured to: control that a vehicle comprising said high voltage energy system is a service mode before disconnecting said high voltage batteries (200).

4. The computer system (100) of any of claims 1-3, wherein the processing circuitry (110) is further configured to:
connect the super capacitor (12) to an air compressor (312) through a discharge connection (302).

5. The computer system of any of claims 1-4, wherein the processing circuitry (110) is further configured to:
connect the super capacitor (12) to a device (310) capable of dissipating energy and to an air compressor (312), through a discharge connection (301, 302), wherein said discharge connection (301, 302) is a high voltage connection.

6. The computer system (100) of any of claims 1-5, wherein the processing circuitry (110) is further configured to:
monitor the discharge of energy from said super capacitator (12); and
determine that a pre-determined level of charge of the super capacitator has been reached, and wherein said pre-determined level of charge is 50 V or less.

7. A vehicle comprising at least one high voltage energy system, a super capacitator (12), a device capable of dissipating energy (310), and the computer system (100) of any of claims 1-6 operatively coupled to the high voltage energy system and a super capacitator (12).

8. The vehicle of claim 7, wherein said vehicle is any one of a battery electric vehicle, hybrid electric vehicle and a fuel cell electric vehicle and wherein said vehicle further comprises at least one device (301) capable of dissipating energy.

9. The vehicle of claim 8, wherein said device (310) capable of dissipating energy is an air cooled resistor.

10. A computer-implemented method, comprising:
determining a level of charge in a super capacitator (12), by a processing circuitry (110) of a computer system (100);
disconnecting high voltage batteries (200) from said super capacitator (12), by a processing circuitry (110) of a computer system (100);
connecting the super capacitor (12) to a device (310) capable of dissipating energy through a discharge connection (301) by a processing circuitry (110) of a computer system (100); and
controlling a discharge of energy from said super capacitator (12) to said device (310) capable of dissipating energy, by a processing circuitry (110) of a computer system (100) .

11. The method of claim 10, further comprising:
controlling switching of auxiliary components (11) to an off position before connecting the super capacitator (12) to the device (310) capable of dissipating energy, by a processing circuitry (110) of a computer system (100).

12. The method of claims 10-11, further comprising:
monitoring the discharge of energy from said super capacitator (12), by a processing circuitry (110) of a computer system (100); and
determining that a pre-determined level of charge of the super capacitator has been reached by a processing circuitry (110) of a computer system (100).

13. The method of any of claims 10 to 12, further comprising:
connecting the super capacitor (12) to an air compressor (312) through a discharge connection (302) by a processing circuitry (110) of a computer system (100).

14. A computer program product comprising program code for performing, when executed by the processing circuitry, the method of any of claims 10-13.

15. A non-transitory computer-readable storage medium comprising instructions, which when executed by the processing circuitry (110), cause the processing circuitry (110) to perform the method of any of claims 10-13.

## Amended claims

### Amended claims in accordance with Rule 137(2) EPC.

1. A computer system (100) comprising processing circuitry (110) configured to:
disconnect high voltage batteries (200) in a high voltage energy system from at least a super capacitor (12);
connect the super capacitor (12) to an air cooled resistor arrangement (310) in an air conduit (311), through a discharge connection (301); and
control a discharge of energy from said super capacitor (12) to said said air cooled resistor arrangement (310), and
connect the super capacitor (12) to an air compressor (312) through a discharge connection (302).

2. The computer system (100) of claim 1, wherein the processing circuitry (110) is further configured to:
control switching of auxiliary components (11) to an off position before connection of super capacitor (12) to the air cooled resistor arrangement (310).

3. The computer system (100) of any of claims 1-2, wherein the processing circuitry (110) is further configured to: control that a vehicle (10) comprising said high voltage energy system is a service mode before disconnecting said high voltage batteries (200).

4. The computer system of any of claims 1-3, wherein the processing circuitry (110) is further configured to:
connect the super capacitor (12) to an air cooled resistor arrangement(310) and to an air compressor (312), through a discharge connection (301, 302), wherein said discharge connection (301, 302) is a high voltage connection.

5. The computer system (100) of any of claims 1-4, wherein the processing circuitry (110) is further configured to:
monitor the discharge of energy from said super capacitor (12); and
determine that a pre-determined level of charge of the super capacitor has been reached, and wherein said pre-determined level of charge is 50 V or less.

6. A vehicle (10) comprising at least one high voltage energy system, a super capacitor (12), a device capable of dissipating energy (310), and the computer system (100) of any of claims 1-5 operatively coupled to the high voltage energy system and a super capacitor (12).

7. The vehicle (10) of claim 6, wherein said vehicle is any one of a battery electric vehicle,
hybrid electric vehicle and a fuel cell electric vehicle and wherein said vehicle (10) further comprises at least one device (310) capable of dissipating energy, wherein said device (310) capable of dissipating energy is an air cooled resistor.

8. A computer-implemented method, comprising:
determining a level of charge in a super capacitor (12), by a processing circuitry (110) of a computer system (100);
disconnecting high voltage batteries (200) from said super capacitor (12), by a processing circuitry (110) of a computer system (100);
connecting the super capacitor (12) to an air cooled resistor arrangement in an air conduit (311)through a discharge connection (301) by a processing circuitry (110) of a computer system (100);
connecting the super capacitor (12) to an air compressor (312) through a discharge connection (302) by a processing circuitry (110) of a computer system (100) and
controlling a discharge of energy from said super capacitor (12) to said air cooled resistor arrangement (310) and to said air compressor (312), by a processing circuitry (110) of a computer system (100) .

9. The method of claim 8, further comprising:
controlling switching of auxiliary components (11) to an off position before
connecting the super capacitor (12) to the air cooled resistor arrangement (310), by a
processing circuitry (110) of a computer system (100).

10. The method of claims 8-9, further comprising:
monitoring the discharge of energy from said super capacitor (12), by a processing circuitry (110) of a computer system (100); and
determining that a pre-determined level of charge of the super capacitor has been reached by a processing circuitry (110) of a computer system (100).

11. A computer program product comprising program code for performing, when executed by the processing circuitry, the method of any of claims 8-10.

12. A non-transitory computer-readable storage medium comprising instructions, which when executed by the processing circuitry (110), cause the processing circuitry (110) to perform the method of any of claims 8-10.
